# EUROPEAN PATENT APPLICATION

(11) **EP 1 890 057 A1**
(43) Date of publication of application: **20.02.2008**
(21) Application number: 06756870.9
(22) Date of filing: 01.06.2006
(51) Int. Cl.: F16J 15/32

(54) **SEALING DEVICE**

(30) Priority: 07.06.2005 JP 2005166731
(71) Applicant: NOK Corporation, Minato-ku Tokyo 105-8585 (JP)
(72) Inventor: KANZAKI, Go, Fukushima-shi, Fukushima 960-1102 (JP); MATSUI, Hiroki, Fukushima-shi, Fukushima 960-1102 (JP); KOBAYASHI, Naoto, Fukushima-shi, Fukushima 960-1102 (JP); YAMANAKA, Satoshi, Fukushima-shi, Fukushima 960-1102 (JP)
(74) Representative: TBK-Patent
(86) International application number: PCT/JP2006/310959
(87) International publication number: WO 2006/132121

(57) **Abstract**

A sealing device where a seal lip (25) of a first seal ring (20) integrally formed with an installation ring (10) from a rubber-like elastic material is made to be slidably in intimate contact with a second seal ring (30) on the inner periphery side of the lip. Degradation in sealing ability of the device caused by reversing of the lip (25) when the second seal ring (30) is installed is prevented, parting of the first seal ring (20) from a mold after molding is facilitated, and the degree of freedom of setting the thickness of the seal lip (25) is increased. To achieve this, the sealing device has the first seal ring (20) integrally formed with the installation ring (10) from a rubber-like elastic material and also has the second seal ring (30) combined with the first seal ring (20), the first seal ring (20) has the seal lip (25) formed projecting outward from the tip (11a) of a tube section (11) of the installation ring (10), and the seal lip (25) is made to be slidably in intimate contact with the outer peripheral surface of the second seal ring (30), with the seal lip (25) reversed toward the inner periphery of the tube section (11) by insertion of the second seal ring (30).

## Description

### BACKGROUND OF THE INVENTION

### Filed of the Invention

The present invention relates to a sealing device to prevent an invasion of dusts or muddy water into a bearing part in, for example, a driving system of an automobile, a construction machine, or an agricultural machine.

### Description of the Conventional Art

For example, the following patent document 1 discloses a typical conventional technique of such a sealing device.

Patent Document 1: Japanese Utility Model Publication No. 7-40127

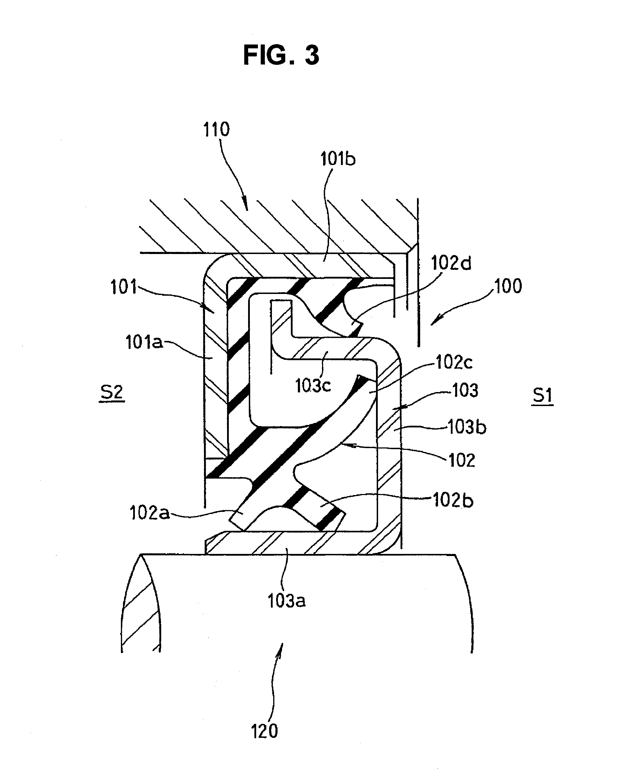

FIG. 3 is a half cross sectional view to illustrate a conventional sealing device disclosed in the patent document 1 by cutting it with a plane passing through an axis. In FIG. 3, a reference symbol 110 indicates an outer periphery-side member (e.g., an outer ring of a bearing), 120 indicates an inner periphery-side member (e.g., an inner ring of a bearing), and a sealing device 100 is mounted between the outer periphery-side member 110 and the inner periphery-side member 120.

More particularly, the sealing device 100 includes a metallic installation ring 101 press-fitted to an inner peripheral surface of the outer periphery-side member 110, a first seal ring 102 integrally formed with the installation ring 101 and made of a rubber-like elastic material, and a second seal ring 103 mounted on an outer peripheral surface of the inner periphery-side member 120. The first seal ring 102 includes first and second inner peripheral lips 102a and 102b, a side lip 102c at the outer periphery side of the lips 102a and 102b, and an outer peripheral seal lip 102d at the outer periphery side of the lip 102c.

An inner peripheral tip, which is directed toward the internal space S1 side, of the first innerperipheral lip 102a is made to be slidably in close contact with an outer peripheral surface of an inner peripheral tube section 103a of the second seal ling 103 so as to seal grease in the internal space S1. Further, the second inner peripheral lip 102b, the side lip 102c and the outer peripheral seal lip 102d are to prevent an invasion of muddy water into the internal space S1 from an external space S2. Among these, the inner peripheral tip, which is directed toward the opposite side of the first inner peripheral lip 102a, of the second inner peripheral lip 102b is made to be slidably in close contact with an outer peripheral surface of the inner peripheral tube section 103a of the second seal ring 103. An outwardly opening tip of the slide lip 102c is made to be slidably in close contact with the inner surface of a seal flange section 103b of the second seal ring 103. An inner peripheral tip, which is directed toward the external space S2 side, of the outer peripheral seal lip 102d is made to be slidably in close contact with an outer peripheral surface of the outer peripheral tube section 103c of the second seal ring 103.

The sealing device 100 has a multi-stage sealing structure constituted of the outer peripheral seal lip 102d, the slide lip 102c and the second inner peripheral lip 102b, in order to prevent an invasion of muddy water or dusts from the external space S2. Thus, excellent sealing ability can be kept for a long period of time.

However, the outer peripheral seal lip 102d in the conventional sealing device 100 illustrated in FIG. 3 may be reversed or damaged by interference with the second seal ring 103, when the first seal ring 102 and the second seal ring 103 are assembled. If the outer peripheral seal lip 102d is formed so as to direct toward the axially opposite side in order to avoid this problem, it becomes difficult to part the first seal ring 102 from a mold after the first seal ring 102 is integrally formed with the installation ring 101. Therefore, during a process to part the first seal ring 102 from a mold, the outer peripheral seal lip 102d may be damaged by being largely deformed between a mold (not illustrated), which moves on the inner periphery of the outer peripheral seal lip 102d, and the outer peripheral tube section 101b of the installation ring 101.

### SUMMARY OF THE INVENTION

### Problems to be solved by the Invention

The present invention solves the above-described problems, and an objective of the present invention is to provide a sealing device structured such that a seal lip of a first seal ring integrally formed with an installation ring from a rubber-like elastic material is made to be slidably in close contact with a second seal ring at the inner periphery side of the lip, in which sealing ability can be kept to be in a stable installation state by positively reversing the seal lip when the second seal ring is installed and a shape of the seal lip can be stabilized by easy parting of the first seal ring from a mold after molding, so that degree of freedom of setting the thickness of the seal lip can be increased.

### Means for solving the Problems

In order to effectively solve the above-described technical problems, a sealing device according to a first aspect of the present invention includes a first seal ring integrally formed with an installation ring with a rubber-like elastic material and a second seal ring assembled with the first seal ring, wherein the first seal ring has a seal lip formed so as to project outward from a tip of a tube section of the installation ring, and the seal lip is made to be slidably in close contact with the outer peripheral surface of the second seal ring in a state that with the seal lip is reversed toward the inner periphery of the tube section of the installation ring by insertion of the second seal ring.

The sealing device according to a second aspect of the present invention has, in addition to in the structure of the first aspect, a sub lip, which is made to be slidably in close contact with an outer peripheral surface of the second seal ring by reversing of the seal lip, is formed on an outer periphery at a base section side of the seal lip.

### Effectiveness of the Invention

According to the sealing device of the first aspect of the present invention, the seal lip of the first seal ring projects outward from a tip in the axial direction of the tube section of the installation ring. Thus, during a process to part the first seal ring from a mold, the seal lip is not forcibly compressed between the seal lip and the tube section of the installation ring. Therefore, parting of the seal ring from a mold can be easily carried out, and damaging of the seal lip can be prevented. Further, the seal lip is made to be in close contact with the outer peripheral surface of the second seal ring in a state of being reversed so as to give a sufficient interference. Thus, following ability with respect to relative eccentricity, inclination, and vibration of the first seal ring and the second seal ring can be improved so that sealing ability can be increased. Furthermore, the degree of freedom of setting the thickness of the seal lip is increased. Thus, sliding torque of the second seal ring with the outer peripheral surface of the tube section can be made low by forming the seal lip to be thin, or sealing ability can be more improved by forming the seal lip to be thick.

According to the sealing device of the second aspect of the present invention, a sliding surface of the seal lip with the second seal ring is protected by the sub lip made to be in close contact with the second seal ring at the outer side of the sliding surface. Thus, more excellent sealing ability can be obtained.

### BRIEF EXPLANATION OF DRAWINGS

FIG. 1 is a half cross sectional view to illustrate an embodiment of a sealing device according to the present invention by cutting it with a plane passing through an axis in an installation state,
FIG. 2 is a half cross sectional view to illustrate the embodiment of the sealing device by cutting it with a plane passing through the axis in a state that a first seal ring and a second seal ring are separated, and
FIG. 3 is a half cross sectional view to illustrate a conventional sealing device by cutting it with a plane passing through an axis.

### EXPLANATION OF SYMBOLS

1: Sealing device
10: Installation ring
11: Fitting tube section (Tube section)
11a: Tip
12: Inward flange
20: First seal ring
21: Rubber layer
22: Grease lip
23: Radial lip
24: Side lip
25: Outer peripheral seal lip (Seal lip)
26: Sub lip
27: Gasket section
30: Second seal ring
31: Inner peripheral seal tube section
32: Seal flange
33: Outer peripheral seal tube section
2: Outer periphery-side member
3: Inner periphery-side member
S1 : Internal space
S2: External space

### DETAILED DESCRIPTION OF PREFERRED EMBODIMENT

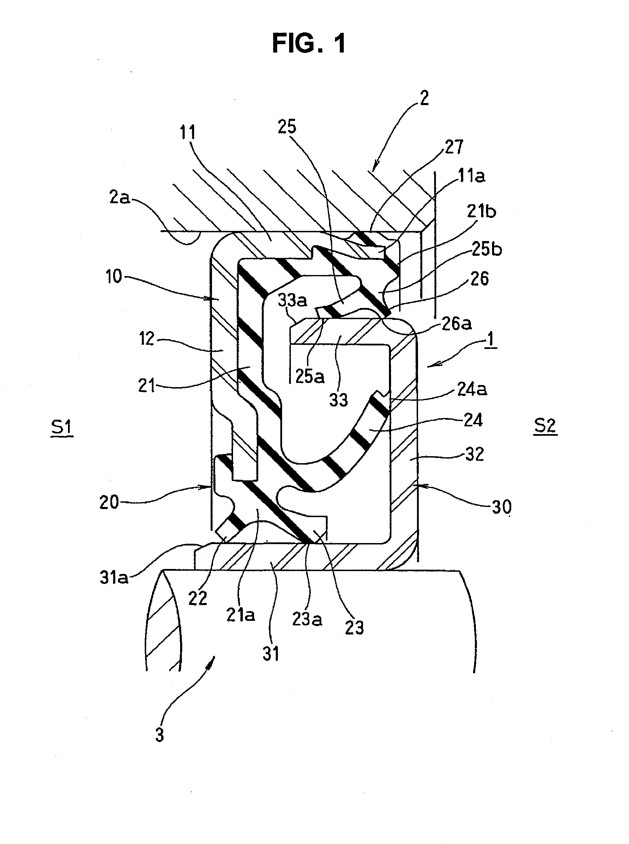

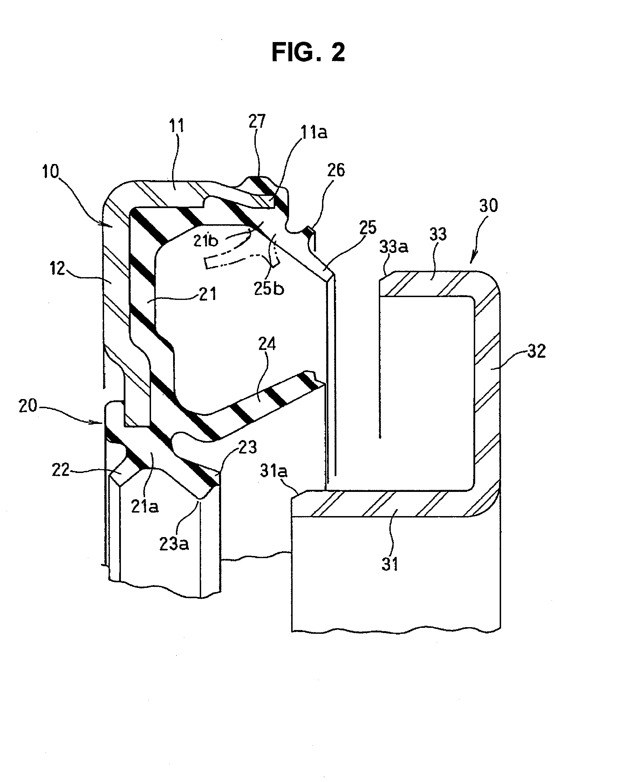

Preferred embodiment of a sealing device according to the present invention will be described below with reference to the drawings. FIG. 1 is a half cross sectional view to illustrate an embodiment of a sealing device according to the present invention by cutting it with a plane passing through an axis in an installation state. FIG. 2 is a half cross sectional view to illustrate an embodiment of a sealing device by cutting it with a plane passing through the axis in a state that a first seal ring and a second seal ring are separated.

In FIG. 1, a reference symbol 1 indicates a sealing device according to the present invention, a symbol 2 indicates an outer periphery-side member (for example, an outer ring of a bearing in drive system of an automobile, a construction machine, or an agricultural machine), and a symbol 3 indicates an inner periphery-side member (for example, an inner ring of the bearing). The sealing device 1 includes an installation ring 10 installed to the outer periphery-side member 2, a first seal ring 20 integrally formed with the installation ring 10, and a second seal ring 30 installed to the inner periphery-side member 3.

More particularly, the installation ring 10 is made by punching press forming of a metal plate such as a steel plate and has an approximately L shape in cross section (an illustrated cross sectional shape) made by cutting the ring with a plane passing through the axis. That is, the installation ring 10 includes a fitting tube section 11 press-fitted to the inner peripheral surface 2a of the outer periphery-side member 2, and an inward flange 12 extending toward the inner periphery side from a tip at the internal space S1 side. In this case, the fitting tube section 11 is the tube section described in the first aspect of the present invention.

The first seal ring 20 includes a rubber layer 21, a grease lip 22, a radial lip 23, a side lip 24, an outer peripheral seal lip 25, a sub lip 26, and a gasket section 27. The rubber layer 21 is integrally vulcanized to bond to the installation ring 10 from an inner peripheral surface of the fitting tube section 11 to an inner surface of the inward flange 12. The grease lip 22, the radial lip 23 and the side lip 24 extend from an inner peripheral section 21a of the rubber layer 21. The outer peripheral seal lip 25 and the sub lip 26 extend from an end section 21b of the rubber layer 21 positioned at a tip 11a of the fitting tube section 11 of the installation ring 10. The gasket section 27 is formed by a part of the rubber layer 21 extending to an outer peripheral surface of the tip 11a of the fitting tube section 11. In this case, the outer peripheral seal lip 25 is a seal lip described in the first aspect of the present invention.

The second seal ring 30 is made by punching press forming of a metal plate such as a steel plate and has an approximately U shape in cross section made by cutting a plane passing through the axis. That is, the second seal ring 30 includes an inner peripheral seal tube section 31, a disk-like seal flange 32, and an outer peripheral seal tube section 33. The inner peripheral seal tube section 31 is press-fitted with an outer peripheral surface of the inner periphery-side member 3. The disk-like seal flange 32 extends to have a plane shape rectangularly to the axis from an end section at the external space S2 side toward the outer periphery side. The outer peripheral seal tube section 33 is formed to have a cylindrical shape from the seal flange 32 toward the internal space S1 so as to be concentric with the inner peripheral seal tube section 31. An outer diameter of the outer peripheral seal tube section 33 of the second seal ring 30 is formed so as to be properly smaller than the diameter of the outer peripheral section of the rubber layer 21 which covers an inner peripheral surface of the fitting tube section 11 in the installation ring 10.

The grease lip 22 of the first seal ring 20 extends from the inner peripheral section 21a of the rubber layer 21 toward the internal space S1 with the diameter at the tip side being decreased. An inner diameter side of the grease lip 22 is made to be slidably in close contact with the outer peripheral surface of the inner peripheral seal tube section 31 of the second seal ring 30. Thus, grease in the internal space S1 is sealed by the grease lip 22 and grease is held between the radial lip 23 and the grease lip 22.

The radial lip 23 of the first seal ring 20 extends toward the opposite side of the grease lip 22 from the inner peripheral section 21a of the rubber layer 21 with the diameter at the tip side being decreased. A seal edge section 23a formed on the inner periphery so as to have an approximately V shape is made to be slidably in close contact with the outer peripheral surface of the inner peripheral seal tube section 31 of the second seal ring 30 with a proper interference.

The side lip 24 of the first seal ring 20 is positioned at the outer periphery side of the radial lip 23 and extends from the inner peripheral section 21a of the rubber layer 21 with the diameter at the tip side being increased. A tip 24a is made to be slidably in close contact with the inner surface of the seal flange 32 having a plane shape approximately vertical to the axis, in a further opening state with a proper deformation received in the axial direction by the seal flange 32 of the second seal ring 30.

The outer peripheral seal lip 25 of the first seal ring 20 is formed to be comparatively thin. The seal lip 25 extends toward the opposite side of the external space S2 from the inner periphery of the end section 21b of the rubber layer 21, which is positioned at the tip 11a of the fitting tube section 11 in the installation ring 10, with the diameter at the tip side being decreased. A tip 25a is made to be slidably in close contact with the outer peripheral surface of the outer peripheral seal tube section 33 of the second seal ring 30 with a proper interference.

The sub lip 26 of the first seal ring 20 extends toward the inner periphery side from a base section 25b of the outer peripheral seal lip 25. A tip 26a of the sub lip 26 is made to be slidably in close contact with the outer peripheral surface of the outer peripheral seal tube section 33 at a position of the external space S2 side from the sliding surface of the outer peripheral seal lip 25 with respect to the outer peripheral surface of the outer peripheral seal tube section 33 of the second seal ring 30.

The gasket section 27 of the first seal ring 20 is pressed to and contacted with the inner peripheral surface 2a of the outer periphery-side member 2 in a state of being properly compressed between the outer periphery-side member 2 and the tip 11a of the fitting tube section 11 of the installation ring 10, and seals a space between the outer periphery-side member 2 and the installation ring 10 (the fitting tube section 11).

In addition, an outer periphery of an end section at the internal space S1 side of the inner peripheral seal tube section 31 in the second seal ring 30 has a chamfered section 31a to prevent damaging of the radial lip 23 when the inner peripheral seal tube section 31 is inserted into the inner periphery of the radial lip 23. Similarly, an outer periphery of an end section at the internal space S1 side of the outer periphery seal tube section 33 in the second seal ring 30 has a chamfered section 33a to prevent damaging of the outer peripheral seal lip 25 and the sub lip 26 when the outer peripheral seal tube section 33 is inserted into the inner peripheries of the outer peripheral seal lip 25 and the sub lip 26.

In this case, when the first seal ring 20 is integrally formed with the installation ring 10, the outer peripheral seal lip 25 of the first seal ring 20 is formed in a conical tube shape which projects from the tip 11a of the fitting tube section 11 of the installation ring 10 to the external side (the external space S2 side in FIG. 1) with the diameter being gradually decreased as illustrated in FIG. 2. The sub lip 26 is formed on the outer periphery near the base section 25b of the outer peripheral seal lip 25. Further, when the first seal ring 20 and the second seal ring 30 are assembled, the outer peripheral seal lip 25 is reversed toward the inner periphery of the fitting tube section 11 of the installation ring 10 by interference and friction resistance with the outer peripheral seal tube section 33, during a process in which the outer peripheral seal tube section 33 in the second seal ring 30 is inserted into the inner periphery of the outer peripheral seal lip 25. Thus, the sub lip 26 is also reversed toward the inner periphery side so as to be in the state illustrated in FIG. 1.

As for the sealing device 1 having the above-described constitution, the first seal ring 20 is held in the non-rotating state by the fitting tube section 11 of the installation ring 10 being tightly fitted to the inner peripheral surface 2a of the outer periphery-side member 2. The grease lip 22 and the radial lip 23 are made to be slidably in close contact with the inner peripheral seal tube section 31 of the second seal ring 30, which is tightly fitted to the inner periphery-side member 3 at the inner peripheral seal tube section 31 so as to integrally rotate with the inner periphery-side member 3. The side lip 24 is made to be slidably in close contact with the seal flange 32 of the second seal ring 30. The outer periphery seal lip 25 and the sub lip 26 are made to be slidably in close contact with the outer peripheral seal tube section 33 of the second seal ring 30. Thus, a sealing function can be realized.

More particularly, a leakage of grease in the internal space S1 is prevented at the sliding section of the grease lip 22 with respect to the outer peripheral surface of the inner peripheral seal tube section 31 of the second seal ring 30. Further, the sliding sections of the grease lip 22 and the radial lip 23 with the inner peripheral seal tube section 31 is properly lubricated by grease (not illustrated) held between the grease lip 22 and the radial lip 23.

Further, an invasion of muddy water or dusts from the external space S2 to the inside beyond the outer peripheral seal lip 25 is prevented at the sliding sections of the sub lip 26 and the outer peripheral seal lip 25 with respect to the outer peripheral surface of the outer peripheral seal tube section 33 of the second seal ring 30.

Further, even if muddy water or dusts are slightly passed through the sliding sections of the sub lip 26 and the outer peripheral seal lip 25 and invaded toward the side lip 24 side, these are sealed at the sliding section between the seal flange 32 and the side lip 24. Further, since the seal flange 32 rotated together with the inner periphery-side member 3 gives centrifugal force to fluid or a foreign matter contacting to the seal flange 32, muddy water or dusts which are going to pass through the sliding section between the seal flange 32 and the side lip 24 toward the inner periphery side are shaken off by the centrifugal force so as to be eliminated. Furthermore, even if muddy water is slightly passed through the sliding section between the seal flange 32 and the side lip 24 toward the inner periphery side, the muddy water is further sealed by the sliding section between the radial lip 23 and the inner peripheral seal tube section 31 of the second seal ring 30. Such the muddy water is eliminated toward the outer periphery side by a shaking-off operation of the seal flange 32. Therefore, by such the multi-stage sealing structure, an invasion of muddy water or dusts from the external space S2 can be certainly prevented.

Further, the first seal ring 20 is formed to have a shape illustrated in FIG. 2. More particularly, the outer peripheral seal lip 25 is formed in a conical tube shape which projects from the tip 11a of the fitting tube section 11 of the installation ring 10 toward the external side with the diameter being gradually decreased. Thus, in a process to part the first seal ring 20 from a mold after molding, the outer peripheral seal lip 25 is not caught by a mold (not illustrated) which is pulled out from the inner periphery thereof. Thus, parting of the first seal ring 20 from a mold can be facilitated. Further, the outer peripheral seal lip 25 is not damaged by being compressed between the outer peripheral seal lip 25 and the outer peripheral tube section 11 of the installation ring 10.

Further, the outer peripheral seal lip 25 is reversed from a shape illustrated in FIG. 2 to a shape illustrated in FIG. 1 at the time of mounting. Thus, interference with respect to the outer peripheral surface of the outer peripheral seal tube section 33 of the second seal ring 30 is increased by reaction force due to the reversing. Therefore, following ability with respect to relative eccentricity, inclination, and vibration of the first seal ring and the second seal ring, and sealing ability can be improved. Thus excellent sealing ability can be obtained. Further, since the outer peripheral seal lip 25 is formed to be thin, sliding torque between the outer peripheral seal lip 25 and the outer peripheral seal tube section 33 of the second seal ring 30 can be made low even if interference is large.

Further, the sliding surface between the outer peripheral seal lip 25 and the outer peripheral seal tube section 33 of the second seal ring 30 is protected by the sub lip 26 which is made to be in close contact with the outer peripheral seal tube section 33 at the outer side thereof (the external space S2 side). Thus, the outer peripheral seal lip 25 can keep excellent sealing ability against muddy water or dusts.

Furthermore, even when the outer peripheral seal lip 25 is formed to be thick, ability to part the first seal ring 20 from a mold after molding is not damaged. Thus, sealing ability can be improved by thickening the outer peripheral seal lip 25.

### INDUSTRIAL APPLICABILITY

The present invention can be usefully applied to a sealing device to prevent an invasion of dusts or muddy water into a bearing part in, for example, a driving system of an automobile, a construction machine or an agricultural machine, to improve sealing ability thereof and facilitate parting of a seal ring from a mold after molding.

## Claims

1. A sealing device comprising a first seal ring (20) integrally formed with an installation ring (10) with a rubber-like elastic material and a second seal ring (30) assembled with the first seal ring (20), wherein the first seal ring (20) has a seal lip (25) formed so as to project outward from a tip (11a) of a tube section (11) of the installation ring (10), and the seal lip (25) is made to be slidably in close contact with the outer peripheral surface of the second seal ring (30) in a state that the seal lip (25) is reversed toward the inner periphery of the tube section (11) of the installation ring (10) by insertion of the second seal ring (30).

2. The sealing device as claimed in claim 1, wherein a sub lip (26), which is made to be slidably in close contact with an outer peripheral surface of the second seal ring (30) by reversing of the seal lip (25), is formed on an outer periphery at a base section (25b) side of the seal lip (25).
